Europäisches Patentamt

European Patent Office

Office européen des brevets

(19)

(11) Veröffentlichungsnummer: **0 010 570 B1**

# EUROPÄISCHE PATENTSCHRIFT

(12)

(45) Veröffentlichungstag der Patentschrift:
02.11.83

(21) Anmeldenummer: 79102157.9

(22) Anmeldetag: 28.06.79

(51) Int. Cl.³: **G 06 F 3/04**, G 06 F 15/16

(54) **Verfahren und Einrichtung zur selbstadaptiven Zuordnung der Arbeitslast einer Datenverarbeitungsanlage.**

(30) Priorität: 30.10.78 US 955562

(43) Veröffentlichungstag der Anmeldung:
14.05.80 Patentblatt 80/10

(45) Bekanntmachung des Hinweises auf die Patenterteilung:
02.11.83 Patentblatt 83/44

(84) Benannte Vertragsstaaten:
**DE FR GB**

(56) Entgegenhaltungen:
**DE - A - 2 352 696**
**DE - A - 2 448 212**
**US - A - 3 553 656**
**US - A - 3 996 561**
**US - A - 4 161 779**

Harold Lorin, "Parallelism in Hardware and Software",
1972, S. 397,398, 406-430
IBM Technical Disclosure Bulletin, Vol. 20, no. 3, Aug.
1977, S. 937,938
Ralston "Encyclopedia of Computer Science, 1976, S.
1227-1229, 1421-1423

(73) Patentinhaber: **International Business Machines
Corporation, Old Orchard Road, Armonk, N.Y. 10504 (US)**

(72) Erfinder: **Freeland, Joseph Watkins, 8607 Jackson Ave.,
Manassas Va. 22110 (US)**
Erfinder: **Gaffney, Jr., John Elmer, 9107 Friars Rd.,
Bethesda Md. 20034 (US)**
Erfinder: **Isert, Irwin Leonard, 11807 Foxclove Rd.,
Reston Va. 22091 (US)**

(74) Vertreter: **Teufel, Fritz, Dipl.-Phys., Schönaicher
Strasse 220, D-7030 Böblingen (DE)**

## Verfahren und Einrichtung zur selbstadaptiven Zuordnung der Arbeitslast einer Datenverarbeitungsanlage

Die Erfindung betrifft ein Verfahren zur selbstadaptiven Zuordnung der Arbeitslast einer Datenverarbeitungsanlage nach dem Oberbegriff des Hauptanspruchs und eine Einrichtung für die Durchführung des Verfahrens.

Bisher sind in der Technik Verbundsysteme bekannt, die aus einer zentralen Verarbeitungseinheit (CPU) und mehreren daran angeschlossenen peripheren Verarbeitungseinheiten (PE) bestehen; jede dieser PE ist dabei mit der CPU über eine Datenübertragungsbahn verbunden, z.B. über eine einzelne Datenverbindung zwischen jeder PE und CPU oder auch über eine gemeinsame Sammelleitung, die die CPU mit allen PE's verbindet. Bei solchen Verbundkonfigurationen führen die PE's einfache sich wiederholende Berechnungen aus und sammeln deren Ergebnisse zur periodischen Übertragung an die CPU, wo komplexere Berechnungen ausgeführt werden. Da jede der verteilt im Verbund aufgestellten PE im Wettbewerb um einen Bearbeitungszeitabschnitt der CPU steht, wurden in der bisherigen Technik Bearbeitungsabschnitte der CPU jeder PE auf verschiedene Weise zugeordnet. Jede PE wurde beispielsweise einfach sequentiell aufgerufen und somit jeder PE gleiche Beträge der CPU-Bearbeitungsabschnitte zugeordnet, um die komplexeren Berechnungen auszuführen.

Für diejenigen PE's, die jedoch weniger Bearbeitung brauchen als andere, stellt dieses einfache sequentielle Aufrufen eine Vergeudung von CPU-Zeit dar. Andere bisher übliche Techniken ordnen ausgewählten PE's relative Prioritäten zu, so dass einige mehr Zeit von der CPU verlangen können als andere PE's. Ein Nachteil dieses Prinzips besteht darin, dass bei übermässiger Belastung der CPU die PE's mit höherer Priorität die Zeit der CPU monopolisieren können, so dass die PE's mit niedrigerer Priorität unangemessen wenig bedient werden.

Eine ähnliche Situation entsteht mit der herkömmlichen Technik bei der Multiprogrammierung, wo mehrere Anwendungsprogramme von einer einzigen CPU bedient werden.

Zur Steuerung des Arbeitsablaufs in derartigen Systemen sind auch schon Verfahren bekannt geworden, bei denen übergeordnete Steuerprogramme z.B. Grob- und Fein-Scheduler den Aufruf von verschiedenen Prozessen oder Programmen in Abhängigkeit von der aktuellen Arbeitslast des Systems im Time-Sharing-Betrieb steuern, um zu verhindern, dass Programme niedriger Priorität nicht mehr bedient werden. Beispiele hierfür sind in dem Buch «Parallelism in Hardware and Software» von Harold Lorin, Englewood Cliffs, 1972, zu finden, insbesondere in den Kapiteln 32.1, 32.7 und 32.8. Derartige adaptive Steuerprogramme sind jedoch kompliziert und erfordern auch einen beträchtlichen Zeitaufwand, um alle notwendigen Betriebsparameter zu erfassen und auszuwerten.

Aus IBM TDB, Vol. 20, Nr. 3, Aug. 1977, S. 937, 938 ist eine dezentral gesteuerte adaptive Lastverteilung bekannt. Diese erfordert jedoch den Austausch von Belastungsinformationen zwischen dezentralen Prozessoren.

Die vorliegende Erfindung stellt sich daher die Aufgabe, ein Verfahren und eine Einrichtung der eingangs genannten Art anzugeben, bei denen ohne Eingriff in bestehende Scheduler oder Steuerprogramme und ohne Austausch von Belastungsinformationen zwischen dezentralen Verarbeitungseinheiten oder Prozessen Überlastbedingungen des Systems so behandelt werden können, dass in jedem Fall auch Prozesse (oder Programme) niederer Priorität ausreichend behandelt werden.

Diese Aufgabe wird durch die in den Ansprüchen 1 und 4 gekennzeichnete Erfindung gelöst; Ausgestaltungen der Erfindung sind in den abhängigen Ansprüchen gekennzeichnet.

Die Bearbeitungsabschnitte einer zentralen Verarbeitungseinheit (CPU) werden unter Überlastungsbedingungen optimal mehreren peripheren Verarbeitungseinheiten (PE) zugeordnet. Jede PE enthält Register zum Speichern der zu erwartenden Länge des Zeitabschnittes zwischen aufeinanderfolgenden Bedienungsperioden, zum Speichern des Anfangszeitpunkts der letzten Bedienungsperiode und zum Speichern der Anfangszeit der gegenwärtigen Bedienungsperiode. Jede PE enthält ausserdem eine Vergleichseinrichtung, um die Differenz zwischen der Anfangszeit der letzten und der gegenwärtigen Bedienungsperiode mit dem Wert des erwarteten Intervalles zwischen aufeinanderfolgenden Bedienungsperioden vergleichen zu können. Ein Steuerspeicher in jeder PE gibt die Anzahl der von der CPU während der gegenwärtigen Bedienungsperiode für die betreffende PE auszuführenden Verarbeitungsschritte an. Die Anzahl der angegebenen Verarbeitungsschritte hat einen ersten Wert, wenn der Vergleicher feststellt, dass die Differenz zwischen den Anfangszeiten kleiner ist als die erwartete Zeit. Die Anzahl der angegebenen Verarbeitungsschritte wird vom Steuerspeicher heruntergesetzt, wenn die Differenz der Anfangszeiten grösser ist als die erwartete Zeit zwischen aufeinanderfolgenden Bedienungsperioden. Wo die PE's jeweils eine zugeordnete relative Priorität bei der Bedienung durch die CPU haben, enthält der Steuerspeicher einen Multiplikator, der den Zahlenwert der Verarbeitungsschritte mit einem numerischen Wert für die relative Priorität der betreffenden PE multipliziert. Auf diese Weise werden auch PE's mit relativ niedriger Priorität bei Überlastung von der CPU bedient. In einem anderen Ausführungsbeispiel kann das erfindungsgemässe Verfahren auf eine Laststeuerung für Multiprogrammierung für die Verarbeitung mehrerer Anwendungsprogramme so angewandt werden, dass die Belastung einer CPU bei Spitzenbelastungszeiten reduziert und doch eine gewisse Bedienung auch der ausgeführten Anwendungsprogramme mit niedrigster Priorität ermöglicht wird.

Ausführungsbeispiele der Erfindung sind in den beigefügten Zeichnungen dargestellt und werden anschliessend näher beschrieben.

Es zeigen:

Fig. 1 ein Blockdiagramm eines Verbundsystems, in dem die Erfindung angewandt wird,

Fig. 2 in einem detaillierten Funktionsblockdiagramm das in einer peripheren Verarbeitungseinheit enthaltene Gerät zur selbst-adaptiven Steuerung der Computerlast,

Fig. 3 die sequentielle Ausführung mehrerer Anwendungsprogramme bei Multiprogrammierung und

Fig. 4 in einem Ablaufdiagramm ein anderes Ausführungsbeispiel der Erfindung für die Laststeuerung bei Multiprogrammierung zur Ausführung mehrerer Anwendungsprogramme.

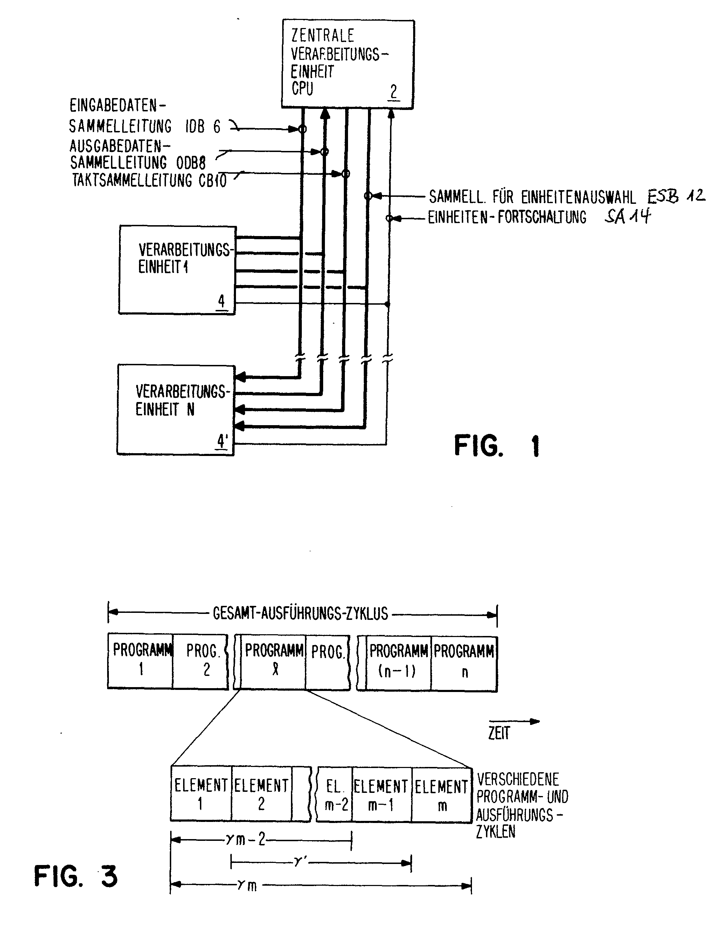

In Fig. 1 ist ein Verbundsystem gezeigt, das die zentrale Verarbeitungseinheit (CPU 2) mit einer relativ grossen Rechenkapazität und mehrere periphere Verarbeitungseinheiten (PE 4 und 4') mit relativ kleinerer Rechenkapazität enthält. Jede der peripheren Verarbeitungseinheiten ist mit der CPU über einen Übertragungsweg verbunden, der von der Eingabedatensammelleitung 6, der Ausgabedatensammelleitung 8, der Taktsammelleitung 10, der Sammelleitung 12 für die Auswahl von Verarbeitungsschritten und der Leitung 14 für das Fortschalten der Verarbeitungseinheiten gebildet wird. Die PE 4 können zwar relativ einfache Rechenaufgaben unabhängig ausführen, sie brauchen aber oft die überlegene Rechenkapazität der CPU 2. Die Betriebsmittel der CPU 2 werden deshalb während sequentiell aufgerufener Bedienungsperioden, die von der CPU 2 gesteuert werden können, unter den PE's aufgeteilt. Während jeder Bedienungsperiode kann die CPU 2 komplexere Verarbeitungsschritte für die gewählte PE 4 ausführen, die über deren eigene Fähigkeiten hinausgehen.

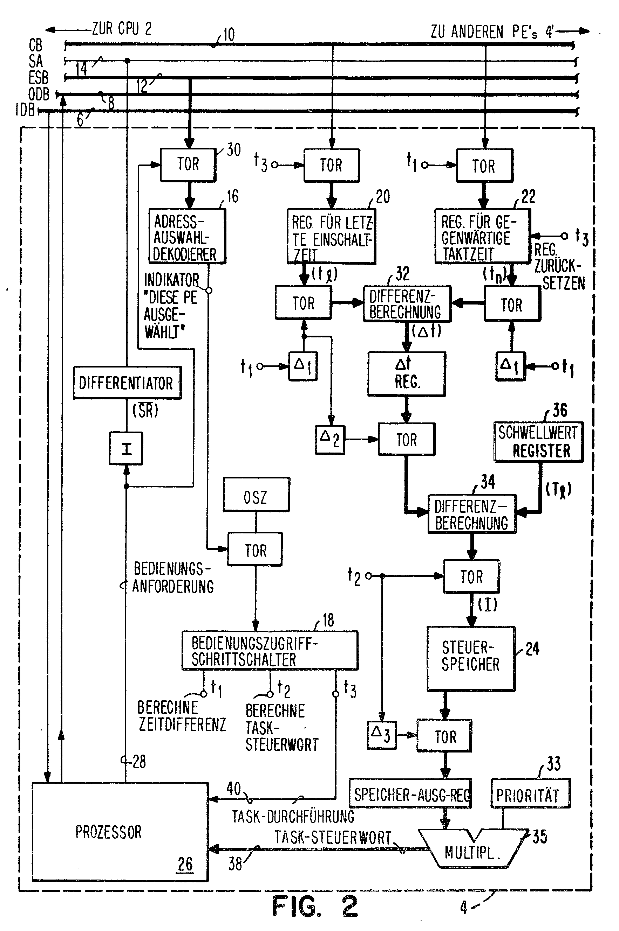

Fig. 2 zeigt in einem genaueren Funktionsblockdiagramm die selbst-adaptive Computerlast-Steuerung, die in jeder PE 4 enthalten ist. Jede PE 4 enthält ein Schwellwertregister 36 zum Speichern der Länge eines erwarteten Zeitabstandes zwischen aufeinanderfolgenden Bedienungsperioden für die betreffende PE 4. Ausserdem enthält jede PE 4 ein Register 20 zum Speichern der Anfangszeit der letzten Bedienungsperiode für die betreffende PE. Jede PE enthält weiter ein Register 22 zum Speichern der Anfangszeit der gegenwärtigen Bedienungsperiode für die betreffende PE.

Die drei Register 36, 22 und 20 sind mit einer Schaltung 34 (nachfolgend genannt) verbunden, um die Zeitdifferenz zwischen dem Anfang der gegenwärtigen Bedienungsperiode und dem Anfang der letzten Bedienungsperiode mit dem Wert des erwarteten Zeitintervalls zwischen aufeinanderfolgenden Bedienungsperioden zu vergleichen. Jede PE enthält ausserdem einen Steuerspeicher 24, der mit dem Vergleicher 34 verbunden ist, um die Anzahl der von der CPU 2 während der gegenwärtigen Bedienungsperiode für die betreffende PE auszuführenden Verarbeitungsschritte anzugeben. Die Anzahl der vom Steuerwortgenerator angegebenen Verarbeitungsschritte hat eine erste Grösse, wenn der Vergleicher 34 feststellt, dass die Differenz in den Anfangszeiten kleiner ist als die erwartete Zeit, und der Steuerspeicher gibt eine kleinere Anzahl von Verarbeitungsschritten an, wenn der Vergleicher 34 feststellt, dass die Differenz der Anfangszeiten grösser ist als die erwartete Zeit für die betreffende PE. Während der Verarbeitungsüberlastung der CPU können also die verschiedenen PE's das Ausmass der von ihnen von der CPU benötigten Bedienung so regeln, dass der Effekt der Überlastung auf die verschiedenen PE's verteilt wird. Wenn jeder PE 4 eine relative Priorität in der Bedienung durch die CPU zugeordnet ist, kann in die selbstadaptive Computerlaststeuerung gemäss Fig. 2 ein Multiplizierer 35 eingebaut werden, um die Anzahl der Verarbeitungsschritte mit einem numerischen Wert für die relative Priorität der betreffenden PE zu multiplizieren. Auf diese Weise werden auch PE's mit relativ niedrigerer Priorität während der Überlastung von der CPU bedient.

Anschliessend werden die verschiedenen Elemente der selbstadaptiven Steuerung in Fig. 2 näher beschrieben. Gemäss Darstellung in Fig. 1, ist jede PE 4 mit fünf Anschlüssen der CPU 2 verbunden, nämlich mit der Eingabedatensammelleitung 6 (IDB), der Ausgabedatensammelleitung 8 (ODB), der Taktsammelleitung 10 (CB), der Einheitenauswahlsammelleitung 12 (ESB) und der Einheitenfortschaltung 14 (SA). Die IDB 6 dient der Informationsüberwachung von der CPU 2 an die PE's 4, und zwar zu jeweils nur der PE 4, die gegenwärtig über die ESB 12 gewählt ist. Die ODB 8 hat die umgekehrte Funktion wie die IDB 6. Die CB 10 sorgt für die Taktierung der Bedienungszugriffsteuerung in der PE 4, die gegenwärtig durch die CPU 2 gewählt ist. Über die SA 14 zeigt die gegenwärtig gewählte PE 4 der CPU 2 an, dass ihre Forderung nach Bedienung von der CPU 2 befriedigt ist und somit die CPU 2 eine andere PE 4 wählen und dieser ihren Dienst anbieten kann. Die IDB 6 und ODB 8 können als zur PE 4 führende Wege für die zu verarbeitenden Daten bzw. als von der PE 4 wegführende Wege für die verarbeiteten Daten angesehen werden.

Nach Darstellung in Fig. 2 besteht die PE 4 aus den folgenden Hauptteilen: Adressauswahldecodierer 16, Bedienungszugriffschrittschalter 18, Register 20 und 22, Steuerspeicher 24 und Prozessor 26. Der Prozessor 26 ist derjenige Teil der PE 4, der die Funktion der PE durchführt. Die anderen Teile bilden die Bedienungszugriffsteuerung für die PE 4.

Die PE 4 arbeitet wie folgt: Wenn der Prozessor 26 bedient werden will, gibt er ein Signal über die Bedienungsanforderungsleitung 28 an das Eingangstor 30 der ESB 12, das mit dem Andressauswahldecodierer 16 verbunden ist. Somit kann der Adressauswahldecodierer die Adresse dieser PE 4 erkennen, wenn sie auf der ESB 12 erscheint. Zu diesem Zeitpunkt schaltet der Bedienungszugriffschrittschalter 18 die Einrichtung für den Bedienungszugriff durch die Schrittfolge vor, mit der festgestellt wird, wieviele Grundaufgaben die CPU 2 für die PE 4 zu dieser Einschaltzeit ausführen muss. Die Hauptoperationsschritte sind: Empfang der gewählten Adresse (gerade beschrieben), Errechnung der Zeitdifferenz, Errechnung des Aufgabensteuerwortes (TASK-Steuerwort) und Ausführung der Aufgaben (TASK's). Die Zeitdifferenz wird mit den Zeitregistern 20 und 22 erreicht. Das Register 20 enthält den Wert für die letzte Einschaltzeit ($t_1$), und das Register 22 enthält die gegenwärtige Taktzeit ($t_n$). Das Register 22 wird von der CB 10 beim ersten Schritt der Zugriffssteuerung geladen. Die Differenz zwischen den Werten in den Registern 20 und 22 wird in der arithmetischen und logischen Einheit 32 (ALU) errechnet und dann im Vergleicher 34 mit dem festen Zeitschwellwert verglichen, der im Schwellwertregister 36 ($T_1$) gespeichert ist; das Ergebnis ist eine Adresse (Index I) des Steuerspeichers 24. Der Steuerspeicher 24 enthält die Höchstzahl von Grundaufgaben (oder einen entsprechenden Zahlen-Wert), die von der CPU 2 bei der Anforderung des Prozessors 26 der gegenwärtig gewählten PE 4 zum augenblicklichen Einschaltzeitpunkt und ausschliesslich für ihn ausgeführt werden können. Dieser Wert ist das Aufgabensteuerwort, das auf die Leitung 38 ausgegeben wird.

Der Index für den Steuerspeicher 24 wird wie folgt errechnet:

$$t_n - t_1 = \triangle t \text{ (immer} > 0) \tag{1}$$
$$\triangle t - T_1 = I \ (> \text{ oder } < \text{ oder } = 0)$$

Wenn I>0, entspricht das adressierte Aufgabensteuerwort dem kürzesten Verarbeitungsabschnitt der CPU 2. Für andere Werte von I(<0) entspricht das Aufgabensteuerwort immer längeren Verarbeitungsabschnitten. Die Werte der Aufgabensteuerwörter sind vorgegeben und entsprechen der relativen Priorität einer bestimmten von der CPU 2 bedienten PE 4. Eine PE mit hoher Priorität hat also ein Aufgabensteuerwort, das für diese PE bei einem gegebenen Wert I einen grösseren Arbeitsaufwand durch die CPU 2 angibt, als für eine PE mit niedrigerer Priorität.

Nach Errechnung und Weiterleitung des Aufgabensteuerwortes an den Prozessor 26 der PE 4 wird der Bedienungszugriffsschrittschalter 18 zur Ausführung der Aufgaben nach Position 40 fortgeschaltet. Zu dieser Zeit wird das Register 22, das die gegenwärtige Taktzeit enthält, gelöscht und das Register 20 für die letzte Einschaltzeit mit dem Zeitwert von CP 10 geladen. Ausserdem beginnt der Prozessor 26 mit der Datenübertragung über die ODB 8 an die CPU 2, um seine Aufgaben für diese Einschaltzeit auszuführen. Die erste Operation, die der Prozessor 26 ausführt, besteht in der Übersetzung des Wertes des Aufgabensteuerwortes in die Höchstzahl von elementaren Aufgaben $N_m$, die die CPU 2 zu dieser Einschaltzeit für ihn ausführen soll. Dann vergleicht der Prozessor diesen Wert mit der Zahl $N_E$, die er ausführen will. Wenn $N_m < N_E$, lässt der Prozessor 26 die CPU 2 $N_m$ Aufgaben ausführen. Wenn $N_m > N_E$, führt die CPU 2 $N_E$ Aufgaben durch. Wenn die Bedienung durch die CPU 2 fertig ist, schaltet der Prozessor 26 das Signal auf der Bedienungsanforderungsleitung 28 ab, wodurch die Bedienungszugriffsschrittschaltung 18 zurückgestellt und Leitung SA 14 aktiviert wird. Die CPU 2 erkennt das als eine Anzeige dafür, dass sie die gesamte Bedienung für die PE 4 zu dieser Einschaltzeit beendet hat.

In einem zweiten Ausführungsbeispiel der Erfindung kann das Konzept der selbst-adaptiven Computerlaststeuerung auf die Laststeuerung bei Multiprogrammierung angewandt werden (bei der mehrere Anwendungsprogramme verarbeitet werden), um so die Belastung einer CPU in Spitzenbetriebszeiten zu reduzieren, und doch die in Ausführung begriffenen Anwendungsprogramme zu bedienen. Das Schlüsselelement dieses zweiten Ausführungsbeispieles der Erfindung besteht darin, dass die einzelnen Anwendungsprogramme den Belastungsgrad der CPU abfühlen können. Wenn sich diese Belastung grösser als die höchste gewünschte Belastung ergibt, können die Anwendungsprogramme ihre Bedienungsanforderungen an die CPU reduzieren. Diese auf jedes Anwendungsprogramm verteilte Laststeuerung führt insgesamt dazu, dass die Gesamtverarbeitungslast der CPU adaptiv gesteuert wird.

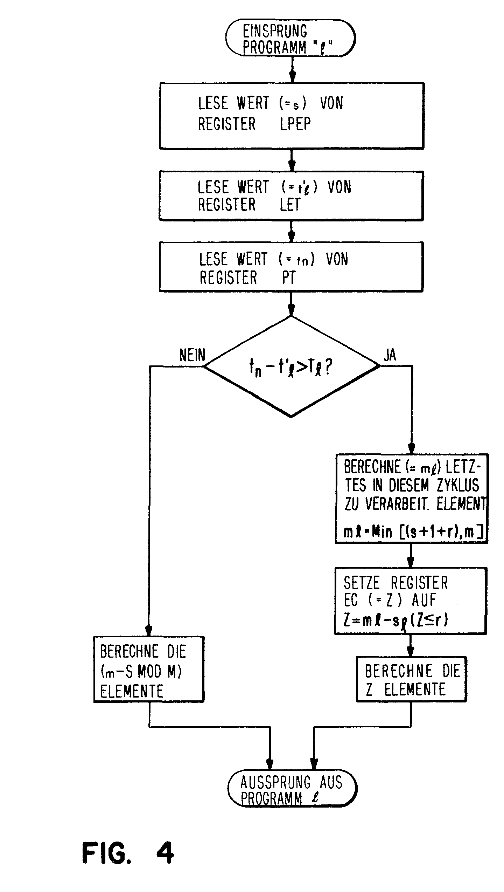

Der Prozess der Multiprogrammierung ist in dem Diagramm in Fig. 3 dargestellt, wo mehrere Anwendungsprogramme 'n' in einer CPU dadurch auszuführen sind, dass jedes Anwendungsprogramm sequentiell aufgerufen wird und entweder eine vorgegebene Anzahl von Grundschritten im Anwendungsprogramm ausführt oder so viele Grundschritte, wie innerhalb einer vorgegebenen Einschaltperiode möglich sind. Nachdem die vorgewählte Anzahl von Schritten ausgeführt wurde, oder die vorgewählte Zeit abgelaufen ist, wird von der CPU das nächste Anwendungsprogramm in der Reihe aufgerufen. Dieser Vorgang läuft weiter, bis alle Anwendungsprogramme aufgerufen wurden; danach wiederholt sich der Aufrufzyklus, indem das erste Anwendungsprogramm erneut aufgerufen wird und die Ausführung der Elementarschritte an dem Punkt fortgeführt wird, wo die Ausführung während des letzten Aufrufzyklus beendet wurde. Die Zeitspanne zwischen aufeinanderfolgenden Aufrufen der Grundschritte in einem bestimmten Anwendungsprogramm nennt man Aufrufzyklus; der Zeitpunkt, zu dem die Ausführung der Grundschritte in einem bestimmten Anwendungsprogramm beginnt, heisst Einschaltzeit. Die Zeitspanne, in der die Grundschritte eines bestimmten aufgerufenen Anwendungsprogrammes ausgeführt werden, nennt man Einschaltperiode.

Im zweiten Ausführungsbeispiel der Erfindung kann ein bestimmtes Anwendungsprogramm innerhalb eines Multiprogrammier-Systems eine Spitzenbelastung oder Überlastung der CPU erkennen und die eigene Anforderung an die CPU zeitweise reduzieren. Dadurch wird die Gesamtbelastung der CPU reduziert, während diese weiterhin alle Anwendungsprogramme, wenn auch evtl. nicht im früheren Ausmass, bedienen kann. Das einzelne Anwendungsprogramm erkennt eine bevorstehende Spitzenbelastung für das System als ganzes aufgrund der Differenz zwischen den geplanten und den tatsächlichen Ausführungszeiten in einem Aufrufzyklus und reduziert dann seine Anforderungen an die CPU, wenn diese Zeitdifferenz einen bestimmten Schwellenwert überschreitet. Diese Lösung gilt für ein Anwendungsprogramm in einer Multiprogrammier-Konfiguration, die entweder als Folge verschiedener Aufgabentypen (Tasks) aufgebaut ist, die auf eine Datei angewandt werden, oder aus einem Aufgabentyp (Task), der auf mehrere Datensätze angewandt wird, oder aus einer Kombination dieser beiden Konfigurationen. Bei dieser Lösung der Laststeuerung einer CPU braucht die Logik des Schedulers für Anwendungsprogramme innerhalb des Schedulers nicht geändert zu werden; die einzelnen Anwendungsprogramme stellen nämlich selbst fest, dass der Belastungspegel der CPU grösser ist als gewünscht und reduzieren dann ihre Anforderung an die CPU.

Im zweiten Ausführungsbeispiel der Erfindung kann die Belastung einer CPU, die mehrere Anwendungsprogramme mit Multiprogrammierung verarbeitet, bei Spitzenbelastung dadurch reduziert werden, dass eines oder mehrere Anwendungsprogramme unabhängig zeitweise ihren Bedarf an Zuordnung von CPU-Verarbeitungszeit reduzieren. Für jedes einzelne Anwendungsprogramm ist die Zeitüberschreitung in der geplanten Anrufzyklusdauer, in der es auf die Zuteilung einer CPU-Zeit unter Steuerung des Schedulers warten musste, ein Anzeiger für die Belastung der CPU. Das geschieht ohne Kenntnis des Schedulers in der CPU, und ohne dessen Neukonfiguration.

Der wichtige Aspekt dieses Ausführungsbeispiels der Erfindung liegt darin, dass sie ein effektiveres Mittel zur Änderung der Programmaufrufe (Scheduling) ist, als eine Modifikation eines zentralen Schedulers zu diesem Zweck; der Aufwand für Unterbrechungen des Schedulers, der in einem üblichen System erforderlich ist, trägt nämlich bei der Konstruktion der vorliegenden Erfindung nicht zur Gesamtbelastung der CPU bei.

Das zweite Ausführungsbeispiel kann im Zusammenhang mit Fig. 3 beschrieben werden, in der die Reihenfolge der Operationsschritte im System dargestellt ist. Im gesamten Aufrufzyklus sollen 'n'-Anwendungsprogramme liegen. Jedes Anwendungsprogramm, z.B. das 1-te Anwendungsprogramm, besteht aus bis zu 'm'-Grundschritten. Bei fehlender Überlastung werden alle Grundschritte ausgeführt, bis einschliesslich zum m-ten Grundschritt, beginnend mit dem Nachfolger des letzten, beim vorhergehenden Gesamtaufrufzyklus ausgeführten Elementes. Wenn also das in einem bestimmten Anwendungsprogramm zuletzt ausgeführte Element die Nummer 's' hatte, dann werden in der neuen Einschaltperiode des Anwendungsprogrammes die Elemente mit den Nummern (s+1) Modulo 'm' bis Nummer 'm' ausgeführt. Bei Überlastung jedoch, werden nach der hier beschriebenen Erfindung nicht alle Elemente für das jeweilige Anwendungsprogramm zur Ausführung vorgesehen. Die vorgesehene Zahl kann entweder einen festen Wert haben oder vom Grad der Verspätung des Einschaltzeitpunkts des Anwendungsprogrammes bezogen auf den erwarteten Einschaltmoment abhängig sein. Der Vorteil des hier gezeigten Systems gegenüber herkömmlichen Systemen liegt somit darin, dass jedes der 'n'-Anwendungsprogramme wenigstens einige Grundschritte im Laufe eines Gesamtaufrufzyklus ausführen kann, wogegen ohne dieses System während eines oder mehrerer Gesamtaufrufzyklen einige Anwendungsprogramme vollständig ausgeführt würden und in anderen kein Element ausgeführt würde.

Fig. 3 zeigt, dass mit der hier dargestellten Erfindung verschiedene mögliche Untermengen von Elementen eines gegebenen Anwendungsprogrammes mit der Nummer '1' während eines Gesamt-Aufrufzyklus ausgeführt werden können. In einem Fall würden nur (m-2) Elemente ausgeführt; in einem anderen die Elemente mit den Nummern 2 bis (m-1), da das Element mit der Nummer '1' bereits im vorhergehenden Gesamtaufrufzyklus ausgeführt wurde.

Jedes Element kann eine besondere Unterroutine sein, und jedes der Elemente, z.B. 'm' in den 1-ten Anwendungsprogramm, wird der Reihe nach auf dieselbe Datei angewendet. Andererseits kann jedes Element eine logische Darstellung derselben Unterroutine sein, die auf 'm' verschiedene Dateien angewendet wird. Ein Beispiel dafür wäre ein Anwendungsprogramm '1', worin eine Implementierung eines digitalen Filters angewendet wird auf 'm' verschiedene Datenkanäle.

Fig. 4 zeigt den Operationsablauf irgendeines Anwendungsprogrammes, z.B. des 1ten Programmes im Multiprogrammier-Betrieb unter selbstadaptiver Lastensteuerung im zweiten Ausführungsbeispiel der Erfindung. Zu jedem der 'n'-Anwendungsprogramme, z.B. dem 1-ten, gehören drei Register, eines für das die letzte Einschaltzeit (LET) und eines zum Zählen der Elemente (EC). In der CPU steht für jedes Anwendungsprogramm ein Register «laufende Zeit» (PT) zur Verfügung. Das LPED-Register enthält die Identität des Elementes des Anwendungsprogrammes Nummer '1', das bei der vorhergehenden Einschaltung des Anwendungsprogrammes zuletzt verarbeitet wurde. Wenn im Falle des Anwendungsprogrammes Nummer '1' das zuletzt verarbeitete Element 'm' war, würde das bedeuten, dass während der gegenwärtigen Einschaltperiode das erste zu verarbeitende Element das Element '1' ist. Das LET-Register enthält den Zeitpunkt, zu dem das Anwendungsprogramm '1' zuletzt eingeschaltet wurde. Das EC-Register enthält die Anzahl der Elemente, die während der gegenwärtigen Einschaltperiode für die Verarbeitung vorgesehen sind.

Nach Darstellung in Fig. 4 sind 'r' Elemente (r<m) während dieser Einschaltperiode zu verarbeiten, wenn $(t_n-t_1) > T_1$ ist, wobei $T_1$ den Schwellenwert für das Anwendungsprogramm mit der Nummer '1' darstellt. Die Anzahl der zur Verarbeitung vorgesehenen tatsächlichen Elemente kann nach Darstellung in Fig. 4 kleiner sein als der Wert 'r', abhängig von der Identität des letzten in der letzten Einschaltperiode verarbeiteten Elementes. Das Arbeitsprinzip besteht darin, dass nur eine Anzahl n<r von Elementen für das Programm mit der Nummer '1' während dieser Einschaltperiode so zur Verarbeitung vorgesehen wird, dass das letzte verarbeitete Element die Nummer 'm' trägt, wenn sonst die Ausführung von 'r'-Elementen die Verarbeitungsfolge über das Element 'm' hinausbringen würde ('m' ist das letzte Element für das Anwendungsprogramm mit der Nummer '1'). Im anderen Fall wird der volle Bereich von 'r'-Elementen ausgeführt, selbst wenn dadurch einige der ersten Elemente in der nächsten Gruppe für dieses Anwendungsprogramm ausgeführt werden.

Ein wichtiger Aspekt dieses zweiten Ausführungsbeispieles der Erfindung besteht darin, dass die selbst-adaptive Lastzuteilung für die CPU bei Multiprogrammierung in unterschiedlichem Mass auf die verschiedenen Anwendungsprogramme, entsprechend ihrer unterschiedlichen Ausführungspriorität angewendet werden kann, indem man die Werte für 'r' und 'T' für jedes Anwendungsprogramm entsprechend einstellt. Anwendungsprogramme mit höherer Priorität können grundsätzlich höhere Werte für $T_1$ und r haben als Anwendungsprogramme mit niedrigerer Priorität, so dass sie ihren Bedarf an Zuordnung von CPU-Zeit und die Anzahl ihrer für die Verarbeitung durch die CPU zu planenden Elemente nicht auf das Mass von Programmen mit niedrigerer Priorität reduzieren, wenn die CPU nicht überlastet ist.

Als weitere Variante kann die in Fig. 4 dargestellte Anzahl von Elementen des Anwendungsprogrammes mit der Nummer '1', die während eines gegebenen Verarbeitungszyklus ausgeführt werden sollen, als Funktion der Belastung der CPU während mehrerer Gesamtaufrufzyklen ausgewählt werden und nicht nur während eines Zyklus, wie es in Fig. 4 dargestellt ist. Eine Variante wäre die Errechnung von $(t_n-t_1)$, die Bildung eines Mittelwertes mit Werten $(t_n-t_1)$ aus einem oder mehreren vorhergehenden Zyklen und anschliessend die Festlegung eines Schwellenwertes für diesen Mittelwert. Eine weitere komplexere Variante wäre die Bildung des Durchschnittswertes $(t_n-t_1)$, wie er gerade beschrieben wurde, und die Gewichtung dieses Wertes mit der Anzahl von Elementen des Anwendungsprogrammes mit der Nummer 1, die während der vorhergehenden Einschaltperiode verarbeitet wurden. In beiden Fällen kann die Anzahl 'r' von Elementen, die für die Verarbeitung während der gegenwärtigen Einschaltperiode für das Anwendungsprogramm mit der Nummer '1' vorzusehen sind, eine Funktion des Wertes $(t_n-t_1)$ oder der gewichteten Summe dieser Faktoren sein.

Das hier gezeigte Gerät und Verfahren zur adaptiven Laststeuerung in einem Rechnerverbundsystem ermöglicht die Reduzierung des Gesamtverarbeitungsbedarfs auf einer CPU, sowohl in einem Verbundsystem als auch bei Multiprogrammierung. Auf diese Weise können Verarbeitungseinheiten oder Anwendungsprogramme mit relativ niedriger Priorität bei Spitzenbelastungen nicht eingefroren werden, bei denen Programme oder Verarbeitungseinheiten mit höherer Priorität sonst die CPU für sich alleine beanspruchen würden.

**Patentansprüche**

1. Verfahren zur selbst-adaptiven Zuordnung der Arbeitslast einer Datenverarbeitungsanlage an mehrere, in zyklischer Sequenz aufgerufene und bearbeitete Prozesse, die jeweils aus mehreren Einzelschritten bestehen, wobei die einzelnen Prozesse unterschiedliche Zeitspannen zur Bearbeitung erhalten, dadurch gekennzeichnet, dass jeder Prozess selbst die Zeitspanne ($\triangle$t) zwischen zwei seiner aufeinanderfolgenden Aufrufe misst oder einen Mittelwert über mehrere von ihm gemessene Zeitspannen zwischen verschiedenen seiner Aufrufe bildet und die Zeitspanne oder den Mittelwert mit einer Erwartungszeit ($T_1$) vergleicht und dass der Prozess in Abhängigkeit vom Vergleichsergebnis die Anzahl seiner bei einem Prozessaufruf durchzuführenden Einzelschritte reduziert, wenn die gemessene Zeitspanne oder der Mittelwert die Erwartungszeit übersteigt.

2. Verfahren nach Anspruch 1, dadurch gekennzeichnet, dass abhängig von der Priorität jedes Prozesses die Erwartungszeit ($T_1$) und/oder die Anzahl der in Abhängigkeit vom Messergebnis zu reduzierenden Einzelschritte einstellbar sind.

3. Verfahren nach einem der Ansprüche 1 oder 2, dadurch gekennzeichnet, dass die Prozesse Programme in einem Multiprogrammiersystem darstellen und dass in jedem Programm ein Register für die letzte Einschaltzeit (LET) sowie ein Register für die laufende Zeit (PT) vorgesehen ist, deren Differenz mit einer Erwartungszeit ($T_1$) für den Aufruf von Anwendungsprogrammen verglichen wird.

4. Einrichtung zur Durchführung des Verfahrens nach einem der Ansprüche 1 oder 2, dadurch gekennzeichnet, dass in einem Verbundsystem aus einer zentralen Verarbeitungseinheit (CPU 2) und mehreren, damit verbundenen Verarbeitungseinheiten (PE 4) jede Verarbeitungseinheit in zyklischer Reihenfolge Betriebsmittel der zentralen Verarbeitungseinheit anfordern kann und dass in jeder Verarbeitungseinheit Zeitregister (20, 22, Fig. 2) zur Bestimmung der Zeitspanne zwischen zwei Aufrufen der Verarbeitungseinheit vorgesehen sind, deren Differenz mit einer Erwartungszeit (in 36) durch eine Vergleichseinrichtung (34) verglichen wird und dass abhängig vom Ergebnis des Vergleichs ein Steuerspeicher (24) angesteuert wird, um die Anzahl der (im Aufgabenwort) anzufordernden Einzelschritte der CPU zu bestimmen.

5. Einrichtung nach Anspruch 4, dadurch gekennzeichnet, dass abhängig von der Priorität der Verarbeitungseinheit die aus dem Steuerspeicher (24) ausgelesene Zahl der Einzelschritte in einer Multipliziereinrichtung (35) mit einer von der Priorität der Verarbeitungseinheit abhängigen konstanten Zahl multipliziert wird.

6. Einrichtung nach Anspruch 4 oder 5, dadurch gekennzeichnet, dass der Aufruf der Verarbeitungseinheiten (PE) durch die zentrale Verarbeitungseinheit (CPU) erfolgt.

**Claims**

1. Method for the self-adaptive assignment of the work load of a data processing system to several processes called and processed in cyclical sequence, with each consisting of a plurality of individual steps and having allocated different time intervals for processing, characterized in that each process itself measures the interval ($\triangle$t) between two of its successive calls, or forms a mean value over several intervals it had measured between different ones of its calls, and compares the interval or the mean value with an expected time ($T_1$), and that the process, according to the result of the comparison, reduces the number of its individual steps to be executed in a process call when the measured interval or mean value exceeds the expected interval.

2. Method as claimed in claim 1, characterized in that according to the priority of each process the expected interval ($T_1$) and/or the number of individual steps to be reduced according to the measured result can be set.

3. Method as claimed in any one of claims 1 or 2, characterized in that the processes represent programs in a multi-programming system, and that each program comprises a register for the latest switchon time (LET), and a register for the current time (PT) whose difference is compared with an expected interval ($T_1$) for the call of user programs.

4. Device for carrying out the method as claimed in any one of claims 1 or 2, characterized in that in an interconnected system consisting of a central processing unit (CPU 2) and several processing units (PE 4) connected thereto each processing unit can demand in cyclical sequence resources from the central processing unit, and that each processing unit comprises time registers (20, 22; Fig. 2) to define the interval between two calls of the processing unit, whose difference is compared with an expected interval (in 36) by a comparator (34), and that depending on the results of the comparison a control storage (24) is addressed to determine the number of the individual CPU steps to be requested (in the task word).

5. Device as claimed in claim 4, characterized in that depending on the priority of the processing unit the number of individual steps read out of the control storage (24) is multiplied in a multiplier (35) with a constant figure depending on the priority of the processing unit.

6. Device as claimed in claim 4 or 5, characterized in that the call of the processing units (PE) is issued by the central processing unit (CPU).

**Revendications**

1. Procédé de commande à adaption automatique de la charge de plusieurs opérations d'un système de traitement de données, qui sont appelées et traitées selon des séquences cycliques, un temps de traitement différent étant affecté à chaque opération, caractérisé en ce que l'intervalle de temps ($\triangle$t) écoulé entre deux opérations appelées successivement est mesuré par chaque opération, ou bien, qu'une valeur moyenne est calculée sur la base de plusieurs intervalles de temps mesurés par ladite opération, qui se sont écoulés entre différentes opérations, et que ledit intervalle de temps ou bien ladite valeur moyenne sont comparés à une durée escomptée ($T_1$), et que chaque opération limite, en fonction du résultat de ladite comparaison, le nombre des diverses séquences exécutées pour chaque appel d'opérations lorsque ledit intervalle de temps ainsi mesuré ou bien ladite valeur moyenne sont supérieurs à ladite durée escomptée.

2. Procédé selon la revendication 1, caractérisé en ce que ladite durée escomptée ($T_1$), et le nombre des diverses séquences limité en fonction du résultat mesuré, est déterminé en fonction de l'ordre de priorité de chaque opération.

3. Procédé selon l'une quelconque des revendications 1 ou 2, caractérisé en ce que lesdites opérations correspondent à des déroulement de programmes dans un système de multiprogrammation, et qu'il est prévu pour chaque programme un registre mémorisant le dernier instant de démarrage de l'opération (LET) ainsi qu'un registre de mémorisation de la durée réelle de chaque opération (PT) dont la différence est comparée à une durée escomptée ($T_1$) de l'appel de programmes d'application.

4. Dispositif de mise en œuvre du procédé selon l'une quelconque des revendications 1 ou 2, caractérisé en ce que, dans un réseau comportant une unité centrale de traitement (CPU 2) et plusieurs unités de traitement (PE 4) connectées à cette unité centrale, chaque unité de traitement peut faire appel, dans un ordre de succession cyclique, à des ressources de l'unité centrale de traitement, et qu'il est prévu dans chaque unité de traitement un registre de temps (20, 21, figure 2) dont l'objet est de calculer l'intervalle de temps écoulé entre deux appels de ladite unité de traitement, la différence étant comparée au moyen d'un comparateur (34) avec une durée escomptée (dans 36), et qu'une mémoire de commande (24) est, en fonction du résultat de comparaison, désignée pour déterminer le nombre des séquences de ladite unité centrale à requérir.

5. Dispositif selon la revendication 4, caractérisé en ce que le nombre desdites séquences extrait de ladite mémoire de commande (24) est, selon l'ordre de priorité de l'unité de traitement, multiplié par une constante définie en fonction de l'ordre de priorité de ladite unité de traitement dans un multiplicateur (35).

6. Dispositif selon la revendication 4 ou 5, caractérisé en ce que l'appel desdites unités de traitement (PE) est effectué par ladite unité centrale de traitement (CPU).

EINGABEDATEN-
SAMMELLEITUNG  IDB 6

AUSGABEDATEN-
SAMMELLEITUNG ODB8

TAKTSAMMELLEITUNG CB10

ZENTRALE
VERARBEITUNGS-
EINHEIT
CPU                    2

SAMMELL. FÜR EINHEITENAUSWAHL ESB 12
EINHEITEN-FORTSCHALTUNG   SA 14

VERARBEITUNGS-
EINHEIT 1
                  4

VERARBEITUNGS-
EINHEIT N
                  4'

**FIG. 1**

GESAMT-AUSFÜHRUNGS-ZYKLUS

| PROGRAMM 1 | PROG. 2 | PROGRAMM X | PROG. | PROGRAMM (n–1) | PROGRAMM n |

ZEIT

ELEMENT 1 | ELEMENT 2 | EL. m-2 | ELEMENT m-1 | ELEMENT m | VERSCHIEDENE PROGRAMM- UND AUSFÜHRUNGS-ZYKLEN

$\gamma m-2$

$\gamma'$

$\gamma m$

**FIG. 3**

ZUR CPU 2 — 10 — ZU ANDEREN PE's 4'

CB
SA — 14
ESB — 12
ODB — 8
IDB — 6

TOR — 30

$t_3$ ○→ TOR

$t_1$ ○→ TOR

ADRESS-AUSWAHL-DEKODIERER — 16

REG. FÜR LETZTE EINSCHALTZEIT — 20

REG. FÜR GEGENWÄRTIGE TAKTZEIT — 22

○ $t_3$ REG. ZURÜCK-SETZEN

INDIKATOR "DIESE PE AUSGEWÄHLT"

$(t_\ell)$

$(t_n)$

TOR

DIFFERENZ-BERECHNUNG — 32

TOR

$(\Delta t)$

$t_1$ ○→ $\Delta_1$

$\Delta t$ REG.

$\Delta_1$ ←○ $t_1$

DIFFERENTIATOR

$(\overline{SR})$

$\Delta_2$ →

TOR

SCHWELLWERT REGISTER — 36

I

$(T_\ell)$

OSZ

DIFFERENZ-BERECHNUNG — 34

BEDIENUNGS-ANFORDERUNG

TOR

$t_2$ ○

TOR

$(I)$

BEDIENUNGSZUGRIFF-SCHRITTSCHALTER — 18

STEUER-SPEICHER — 24

○ $t_1$    ○ $t_2$    ○ $t_3$

BERECHNE ZEITDIFFERENZ

BERECHNE TASK-STEUERWORT

$\Delta_3$ →○ TOR

28

40

$\Delta_3$ →○ TOR

TASK-DURCHFÜHRUNG

SPEICHER-AUSG-REG

PRIORITÄT — 33

PROZESSOR

26

TASK-STEUERWORT

38

MULTIPL. — 35

FIG. 2

4

FIG. 4